# EUROPEAN PATENT SPECIFICATION

(11) **EP 3 832 825 B1**
(45) Date of publication and mention of the grant of the patent: **05.10.2022**
(21) Application number: 19889052.7
(22) Date of filing: 19.09.2019
(51) Int. Cl.: H02H 9/04, H02H 9/06, H02H 9/02

(54) **SURGE PROTECTION DEVICE AND SYSTEM**
ÜBERSPANNUNGSSCHUTZVORRICHTUNG UND - SYSTEM
DISPOSITIF ET SYSTÈME DE PROTECTION CONTRE LES SURCHARGES

(30) Priority: 28.11.2018 CN 201811433169
(43) Date of publication of application: 09.06.2021
(73) Proprietor: Xiamen Set Electronics Co., Ltd, Xiamen, Fujian 361101 (CN)
(72) Inventor: ZHANG, Xianggui, Xiamen, Fujian 361101 (CN)
(74) Representative: Petculescu, Ana-Maria
(86) International application number: PCT/CN2019/106807
(87) International publication number: WO 2020/108034

(56) References cited:
- CN-A- 101 800 423
- CN-A- 101 800 423
- CN-A- 105 098 748
- CN-A- 106 655 143
- CN-A- 109 546 637
- CN-U- 201 639 288
- CN-U- 202 183 599
- CN-U- 205 407 247
- CN-U- 206 559 037
- CN-U- 206 673 575
- CN-Y- 201 075 676
- KR-A- 20050 092 694
- US-A- 4 571 656

## Description

### TECHNICAL FIELD

The present invention relates to the technical field of overvoltage protection, and in particular to a surge protection device and system.

### BACKGROUND

A surge protection device is an overvoltage protection device connected to electronic equipment or a low-voltage power distribution system. Surge protection devices are typically used to discharge surge currents caused by lightning currents, lightning induction and switching operations while limiting the amplitude of overvoltage, thereby preventing the surge current from causing damage to other devices in the loop.

In order to improve the surge current discharge capability of surge protection devices, the common practice is to test the surge protector installed between the LPZ0 zone (Lightning Protection Zone, referred to as LPZ) and the LPZ1 zone by using a simulated lightning impulse current (the waveform of the impulse current is 10/350 µs) according to the IEC 61643-11 standard or the GB/T 18802.1 standard. This lightning impulse current features a long-duration waveform and large energy. The surge protection device is, therefore, required to possess an extremely strong charge transfer capability in order to effectively protect the devices in the loop.

In order to meet the aforementioned test requirements, the existing surge protection devices include the following two types:
(1) Surge protection device with multiple varistors connected in parallel: due to the limitation of the manufacturing process, it is difficult to fabricate large-sized varistors, but the current capacity of the varistor is directly related to its own size. In this regard, a single varistor generally has a current capacity in the range of 10-100 kA (under an impulse current waveform of 8/20 µs). In order to meet the test requirements for the lightning impulse current Iᵢₘₚ=12.5 kA (10/350 µs), it is necessary to connect at least 4 varistors of 20 kA (8/20 µs) in parallel. However, since these varistors are semiconductor devices, when the lightning impulse current has excessively large energy, the varistor is easily broken down due to overheating. Thus, this surge protection device has the problem of poor capability of withstanding multiple pulses.
(2) Single gap + arc-quenching device type surge protection device: this surge protection device utilizes a single gap to discharge the lightning impulse current. When a power frequency follow current is caused, the arc-quenching device is used to limit the arc and cut off the follow current. This surge protection device has a strong capability to discharge the lightning impulse current, but has a blind zone of follow current interruption. When a protected system generates a large enough follow current (generally at the kiloampere level), the arc can be easily transferred to the arc-quenching device through the gas generated by electromagnetic force or the current thermally eroding the insulating material. However, when the follow current is hundreds of amperes or tens of amperes, the arc is difficult to be transferred to the arc-quenching device, which will cause a failure of the arc-quenching.

Different surge protection devices are disclosed in the following documents: CN106655143A, CN201639288U, KR20050092694A, US4571656A, CN202183599, CN206673575U, CN206559037U, CN205407247U.

In summary, the existing surge protection devices have the problems of poor capability of withstanding multiple pulses and low arc-quenching reliability.

### SUMMARY

In view of the above-mentioned problems, the present invention, as defined in the appended single independent apparatus claim, provides a surge protection device and system, which can effectively improve the capability of withstanding multiple pulses and prevent failure of arc-quenching.

In order to solve the above-mentioned technical problems, the present invention provides a surge protection device, including: an impedance device, a voltage-limiting surge protector, and a switching surge protector. The impedance device is connected in parallel with the voltage-limiting surge protector. A parallel branch of the impedance device and the voltage-limiting surge protector is connected in series with the switching surge protector to form a discharge channel of a lightning impulse current. A series branch of the impedance device and the switching surge protector forms a discharge channel of a follow current.

Preferably, the surge protection device further includes: a thermal protector connected to the series branch where the switching surge protector is located. When the temperature reaches a preset temperature threshold, the thermal protector acts to cut off the connection with the series branch where the switching surge protector is located.

Preferably, the thermal protector includes a thermal fuse, a resettable thermostat, a thermal disconnector, a bimetal thermal circuit breaker, a mechanical thermal disconnector or a low-melting-point alloy disconnector.

Preferably, the low-melting-point alloy disconnector includes an elastic metal sheet, and one end of the elastic metal sheet is welded to the switching surge protector by a low-temperature alloy.

The impedance device includes a series branch formed by the resistor and an inductor.

Preferably, the voltage-limiting surge protector includes a varistor or a suppression diode. The switching surge protector includes a gas discharge tube, a semiconductor discharge tube or a discharge gap.

Preferably, the discharge gap includes a graphite discharge gap, an insulating tube and two copper electrodes.

The graphite discharge gap includes two graphite electrodes, a polytetrafluoroethylene annular film arranged between the two graphite electrodes, and an insulating ring sleeved on each graphite electrode.

Each of both ends of the insulating tube is provided with an internal thread.

The outer walls of the two copper electrodes are provided with external threads.

The graphite discharge gap is sleeved in the insulating tube, and the external threads of the two copper electrodes are screwed to both ends of the insulating tube to achieve assembly.

Preferably, the switching surge protector includes n discharge gaps and *n-1* capacitors, and the n discharge gaps are sequentially connected to the voltage-limiting surge protector. The first ends of the n-1 capacitors are separately connected to the second end of the voltage-limiting surge protector. The second ends of the *n-1* capacitors are respectively connected to the second ends of the first discharge gap to the (*n*-1)^{th} discharge gap of the n discharge gaps in a one-to-one correspondence; wherein *n*≥2, and *n* is an integer.

In order to solve the above-mentioned technical problems, the present invention further provides a surge protection system, including: m surge protection devices of any one of the above types and m-1 capacitors. The m surge protection devices are sequentially connected in series. The m-1 capacitors are connected in parallel with the switching surge protectors in the first surge protection device to the (*m*-1)^{th} surge protection device of the *m* surge protection devices, respectively; wherein *m*≥2, and *m* is an integer.

The surge protection device and system provided by the present invention have the following advantages. The impedance device is connected in parallel with the voltage-limiting surge protector, and a parallel branch of the impedance device and the voltage-limiting surge protector is connected in series with the switching surge protector to form a discharge channel of a lightning impulse current (or surge current). When the lightning impulse current arises, since the lightning impulse current is relatively small, the lightning impulse current is discharged through the series branch of the impedance device and the switching surge protector. When the lightning impulse current gradually increases, the voltage across the impedance device gradually increases. When the voltage across the impedance device exceeds the operating voltage of the voltage-limiting surge protector, the voltage-limiting surge protector shunts part of the lightning impulse current, and the lightning impulse current is discharged through the impedance device, the voltage-limiting surge protector and the switching surge protector. When a lightning impulse current arises, the impedance device can share all the lightning impulse current, and the voltage-limiting surge protector shares part of the lightning impulse current only when the voltage across the impedance device exceeds the operating voltage of the voltage-limiting surge protector. Therefore, this surge protection device can effectively reduce the lightning impulse current load of the voltage-limiting surge protector and improve the capability of the surge protection device to withstand multiple pulses. Moreover, the voltage-limiting surge protector can limit the overvoltage caused by the lightning impulse current at a low level, so that the lightning impulse current can be effectively discharged. Furthermore, in the surge protection device, the impedance device and the switching surge protector form a discharge channel of a follow current. When a power frequency follow current arises, the impedance device can limit the follow current in a low current value range, so that when the power frequency follow current still has a follow current after the first current zero-crossing, the switching surge protector is capable of safely interrupting the follow current to provide the surge protection device with a reliable follow current interruption capability to effectively quench the arc. In addition, the surge protection device uses only one voltage-limiting surge protector and one switching surge protector to achieve the protection performance and safety performance that are achieved by multiple varistors in the existing surge protection devices, which greatly reduces the size of the surge protection device while saving substantial manufacturing costs of the surge protection device.

The above description is only an overview of the technical solution of the present invention. In order to understand the technical means of the present invention more clearly to enable the present invention to be implemented in accordance with the content of the specification, the specific implementations of the present invention are illustrated hereinafter to make one of the above and other objectives, features and advantages of the present invention more obvious and comprehensible.

### BRIEF DESCRIPTION OF THE DRAWINGS

In order to explain the technical solutions in the embodiments of the present invention or the prior art more clearly, the drawings used in the description of the embodiments or the prior art are briefly introduced below. Obviously, the drawings in the following description are some embodiments of the present invention, for those of ordinary skill in the art, other drawings can be obtained based on these drawings without creative efforts.
FIG. 1 schematically shows a structural schematic diagram of an embodiment of a surge protection device according to the present invention.
FIG. 2 schematically shows a structural schematic diagram of another embodiment of the surge protection device according to the present invention.
FIG. 3 schematically shows a structural schematic diagram of a connection mode of a thermal protector in the surge protection device according to the present invention.
FIG. 4 schematically shows a structural schematic diagram of another connection mode of the thermal protector in the surge protection device according to the present invention.
FIG. 5 schematically shows a structural schematic diagram of still another embodiment of the surge protection device not building a part of the present invention.
FIG. 6 schematically shows a structural schematic diagram of a surge protection device with two discharge gaps and one capacitor C1 not building a part of the present invention.
FIG. 7 schematically shows a structural schematic diagram of a surge protection device with n discharge gaps and *n-1* capacitors C1 not building a part of the present invention.
FIG. 8 schematically shows a structural schematic diagram of an embodiment of a surge protection system according to the present invention.
FIG. 9 schematically shows a structural schematic diagram of an embodiment of a discharge gap in the surge protection device according to the present invention.

### DETAILED DESCRIPTION OF THE EMBODIMENTS

In order to make one of the objectives, technical solutions and advantages of the embodiments of the present invention clearer, the technical solutions in the embodiments of the present invention are clearly and completely described below with reference to the drawings in the embodiments of the present invention. Obviously, the described embodiments are a part of the embodiments of the present invention, rather than all the embodiments. Based on the embodiments of the present invention, all other embodiments obtained by those of ordinary skill in the art without creative efforts shall be fall within the scope of protection of the present invention.

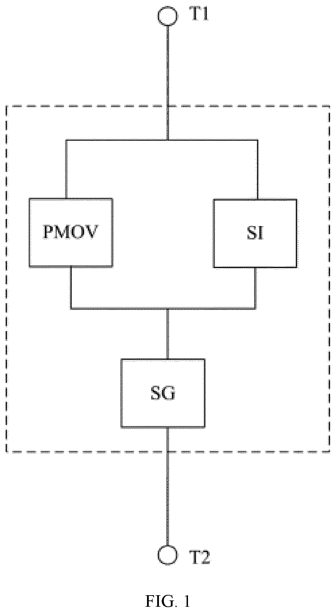

Referring to FIG. 1, which is a structural schematic diagram of an embodiment of a surge protection device according to the present invention.

The surge protection device includes the impedance device SI, the voltage-limiting surge protector PMOV, and the switching surge protector SG. The impedance device SI is connected in parallel with the voltage-limiting surge protector PMOV. The parallel branch of the impedance device SI and the voltage-limiting surge protector PMOV is connected in series with the switching surge protector SG to form a discharge channel of a lightning impulse current. The series branch of the impedance device SI and the switching surge protector SG forms a discharge channel of a follow current.

In the present invention, the surge protection device has the terminal T1 and the terminal T2. The terminal T1 and the terminal T2 are both made of copper sheets. When the surge protection device is tested by a lightning surge waveform, the lightning surge waveform flows into the surge protection device from the terminal T1, and the surge protection device discharges the lightning impulse current and the follow current from the terminal T2.

In the specific implementation process, the surge protection device is suitable for a single-phase system, a single-phase branched system, a multi-phase system and any loop that requires lightning surge protection. For example, the surge protection device can be connected between L-PE and N-PE of the single-phase system, or between L-PE, N-PE and L-N, or be connected between L1-L2, L2-L3, L1-L3, L1-PE, L2-PE, L3-PE and N-PE of the three-phase system, or be connected between L1-PE, L2-PE, L3-PE and N-PE of the multi-phase system, wherein L is a phase wire/live wire, N is a neutral wire/naught wire, and PE is a protective wire/earth wire.

Compared with the prior art, in the surge protection device of the present invention, the impedance device SI is connected in parallel with the voltage-limiting surge protector PMOV, and a parallel branch of the impedance device SI and the voltage-limiting surge protector PMOV is connected in series with the switching surge protector SG to form a discharge channel of a lightning impulse current (or surge current). When a lightning impulse current arises, since the lightning impulse current is relatively small, the lightning impulse current is discharged through the series branch of the impedance device SI and the switching surge protector SG. When the lightning impulse current gradually increases, the voltage across the impedance device SI gradually increases. When the voltage across the impedance device SI exceeds the operating voltage of the voltage-limiting surge protector PMOV, the voltage-limiting surge protector PMOV shunts part of the lightning impulse current, and the lightning impulse current is discharged through the impedance device SI, the voltage-limiting surge protector PMOV and the switching surge protector SG. When a lightning impulse current arises, the impedance device SI can share all the lightning impulse current, and the voltage-limiting surge protector PMOV shares part of the lightning impulse current only when the voltage across the impedance device SI exceeds the operating voltage of the voltage-limiting surge protector PMOV. Therefore, this surge protection device can effectively reduce the lightning impulse current load of the voltage-limiting surge protector PMOV and improve the capability of the surge protection device to withstand multiple pulses. Moreover, the voltage-limiting surge protector PMOV can limit the overvoltage caused by the lightning impulse current at a low level, so that the lightning impulse current can be effectively discharged. Furthermore, in the surge protection device, the impedance device SI and the switching surge protector SG form a discharge channel of a follow current. When a power frequency follow current arises, the impedance device SI can limit the follow current in a low current value range, so that when the power frequency follow current still has a follow current after the first current zero-crossing, the switching surge protector SG is capable of safely interrupting the follow current to provide the surge protection device with a reliable follow current interruption capability to effectively quench the arc. In addition, the surge protection device uses only one voltage-limiting surge protector PMOV and one switching surge protector SG to achieve the protection performance and safety performance that are achieved by multiple varistors in the existing surge protection devices, which greatly reduces the size of the surge protection device while saving substantial manufacturing costs of the surge protection device.

Optionally, in the surge protection device, the voltage-limiting surge protector PMOV includes a varistor or a suppression diode. The switching surge protector SG includes a gas discharge tube, a semiconductor discharge tube or a discharge gap. The impedance device SI includes a series branch formed by the resistor and an inductor. The impedance device SI can also be a structural device with a certain resistance value, for example, a spiral-shaped conductor with an inductance and resistance value, formed by mechanical processing; and a resistor of a certain shape, formed by winding a wire with a relatively high resistivity.

Further, taking an example where the voltage-limiting surge protector PMOV is the varistor PMOV1, the switching surge protector SG is the graphite discharge gap SG1, and the impedance device SI is a series branch formed by the resistor R and the inductor L to illustrate the structure of the surge protection device below.

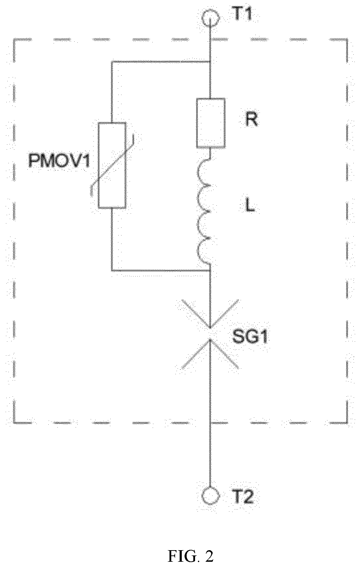

As shown in FIG. 2, which is a structural schematic diagram of another embodiment of the surge protection device according to the present invention.

In the present embodiment, the varistor PMOV1 has a size of 34 mm×34 mm, a nominal varistor voltage of 300 V, and a surge withstand capability of 40 kA (8/20 µs). The graphite discharge gap SG1 is an 0.4 mm air gap formed by two graphite electrodes. The resistor R and the inductor L are both formed by winding a 6J20-type resistance wire, wherein the resistivity of the resistance wire is 1.4 Ω•m, the resistance value of the resistor R is about 1 Ω, and the inductance value of the inductor L is about 1.1 µH.

In the present embodiment, the series branch formed by the resistor R and the inductor L is connected in parallel with the varistor PMOV1 to form a discharge channel of a lightning impulse current, and the series branch formed by the resistor R, the inductor L and the graphite discharge gap SG1 forms a discharge channel of a power frequency follow current that may continue in the first half-wave of the arrived lightning impulse current. The series branch formed by the resistor R and the inductor L is connected in series with the graphite discharge gap SG1. The series branch formed by the resistor R and the inductor L is configured to limit the amplitude of the follow current in the graphite discharge gap SG1, and is connected to the graphite discharge gap SG1 to form a discharge channel of a follow current.

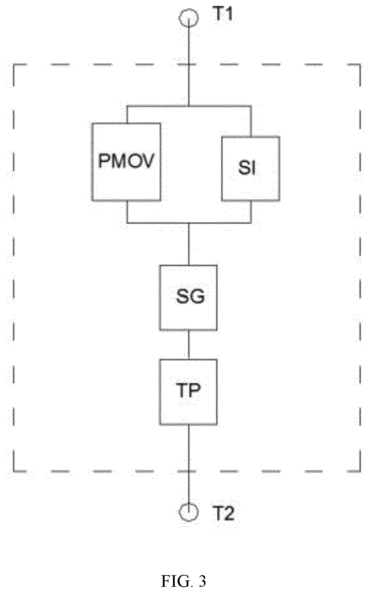

Referring to FIG. 3, which is a structural schematic diagram of a connection mode of a thermal protector in the surge protection device according to the present invention.

In order to improve the safety of the surge protection device, the surge protection device further includes: the thermal protector TP connected to the series branch where the switching surge protector SG is located. When the temperature reaches a preset temperature threshold, the thermal protector TP acts to cut off the connection with the series branch where the switching surge protector SG is located.

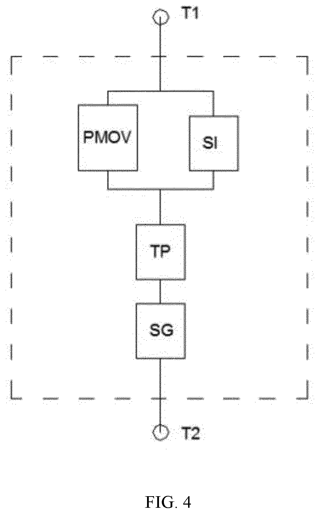

As shown in FIG. 3 and FIG. 4, in the present embodiment, the thermal protector TP is connected between the switching surge protector SG and the terminal T2, or connected between the parallel branch formed by the impedance device SI and the voltage-limiting surge protector and the switching surge protector SG. When the temperature of the thermal protector reaches the preset temperature threshold, the thermal protector TP acts to cut off the connection with the switching surge protector SG to enable the surge protection device to be in a safe failure state, thereby avoiding secondary fire disasters caused by damage or burning of the surge protection device due to an excessive temperature.

Optionally, the thermal protector TP includes a thermal fuse, a resettable thermostat, a thermal disconnector, a bimetal thermal circuit breaker, a mechanical thermal disconnector or a low-melting-point alloy disconnector. Taking an example where the thermal protector is a thermal fuse to illustrate the structure of the surge protection device below.

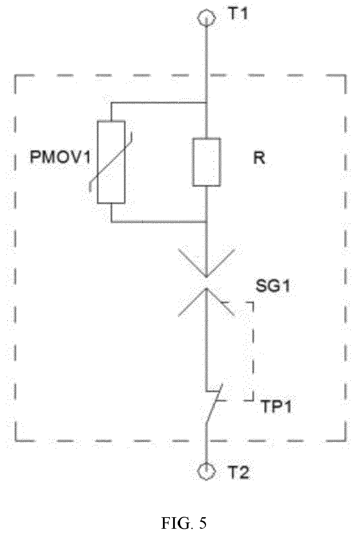

As shown in FIG. 5, which is a structural schematic diagram of still another embodiment of the surge protection device not being a part of the present invention.

In the surge protection device, the thermal protector adopts the thermal fuse TP1. The thermal fuse TP1 has a rated functioning temperature of 125°C, an actual functioning temperature of 121°C±3°C, a rated current of 30 A, and a surge withstand capability of 40 kA (8/20 µs). The impedance device is the resistor R. When the temperature of the thermal fuse TP1 reaches its functioning temperature, the thermal fuse TP1 acts to cut off the connection with the graphite discharge gap SG1 to enable the surge protection device to be in a safe failure state.

Optionally, the low-melting-point alloy disconnector in the thermal protector includes an elastic metal sheet. The elastic metal sheet is stamped from 0.5-thick phosphor bronze and has a width of 10 mm. The elastic metal sheet is welded to the switching surge protector by a low-temperature alloy, wherein the melting point of the low-temperature alloy is 145°C±3°C. When the low-temperature alloy is melted, the elastic metal sheet bounces off the switching surge protector.

The switching surge protector may include two or more switching surge protectors to improve its follow current interruption capability.

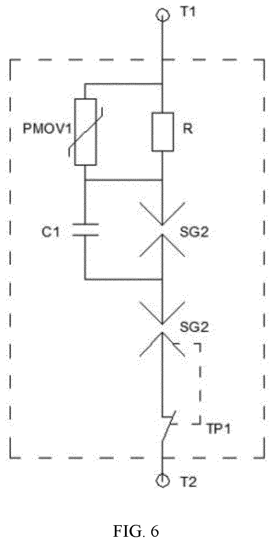

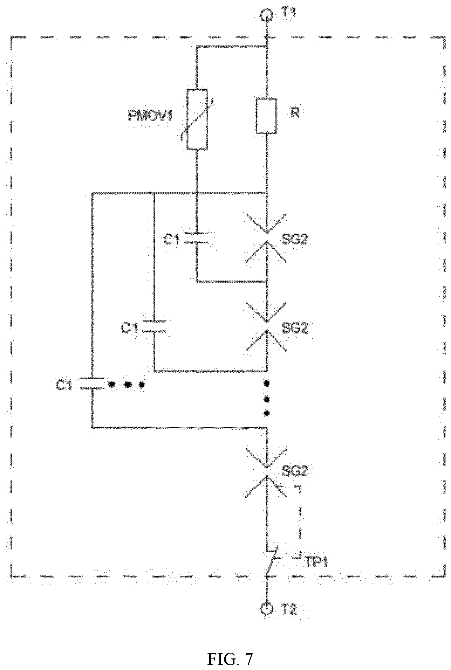

Further, taking an example where the switching surge protector is discharge gaps and the voltage-limiting surge protector is a varistor to illustrate the structure of the surge protection device in detail below with reference to FIG. 6 and FIG. 7.

Referring to FIG. 6 and FIG. 7, the switching surge protector includes n discharge gaps SG2 and n-1 capacitors C1. The n discharge gaps SG2 are sequentially connected to the varistor PMOV1. The first ends of the n-1 capacitors C1 are separately connected to the second end of the varistor PMOV1. The second ends of the n-1 capacitors C2 are respectively connected to the second ends of the first discharge gap to the (*n*-1)^{th} discharge gap of the n discharge gaps SG2 in a one-to-one correspondence; wherein *n*≥2, and *n* is an integer.

In the present embodiment, the n discharge gaps SG2 in the switching surge protector are sequentially connected to the varistor PMOV1 to form a discharge channel of a lightning impulse current, and form a follow current channel for the first half-wave of the lightning impulse current that may cause a power frequency follow current. The n discharge gaps SG2 and the resistor R form a discharge channel of a follow current. The first ends of the n-1 capacitors C1 are separately connected to the second end of the varistor PMOV1. The second ends of the n-1 capacitors C1 are respectively connected to the second ends of the first discharge gap to the (*n*-1)^{th} discharge gap, and these capacitors can couple the surge impulse voltage formed by the lightning surge waveform while triggering each discharge gap SG2 of the n discharge gaps SG2 to improve the follow current interruption and triggering capability of the n discharge gaps SG2 in the switching surge protector.

In the present embodiment, the discharge gap SG2 adopts a gas discharge tube. The gas discharge tube has a diameter of 12 mm, a height of 6 mm, a DC breakdown voltage of 600 V, a surge withstand capability of 20 kA (8/20 µs), and a follow current interruption capability of 50 A at 255 V. The capacitor C1 adopts an ordinary ceramic capacitor with a capacitance value of 1000 pf and a rated withstand voltage of 2000 V.

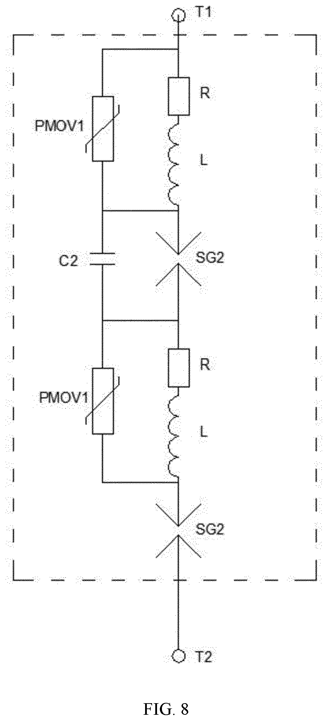

Referring to FIG. 8, the present invention further provides a surge protection system. The surge protection system includes: m surge protection devices of any one of the above types and *m*-1 capacitors C2. The *m* surge protection devices are sequentially connected in series. The *m*-1 capacitors C2 are connected in parallel with the switching surge protectors in the first surge protection device to the (*m*-1)^{th} surge protection device of the *m* surge protection devices, respectively; wherein *m*≥2, and *m* is an integer. The impedance device in each surge protection device is a series branch of the resistor R and the inductor L that are connected in series. The voltage-limiting surge protector is the varistor PMOV1, and the switching surge protector is the discharge gap SG2.

In the present embodiment, the *m* surge protection devices are sequentially connected in series to reduce the resistance value of the impedance device in each surge protection device, while reducing the lightning impulse current load of the voltage-limiting surge protector in each surge protection device to realize the segmented discharge of the reduced lightning impulse current load and the follow current. In this way, the surge protection system has stronger stability while reducing the lightning impulse current load of the voltage-limiting surge protector and making arc-quenching reliable. Moreover, the *m*-1 capacitors C2 are configured to couple the surge impulse voltage formed by the lightning surge waveform and are capable of triggering the switching surge protectors in the *m* surge protection devices to improve the follow current interruption and triggering capability of the switching surge protector.

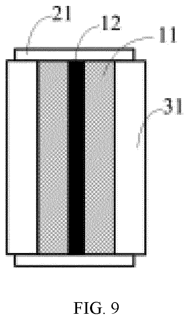

In the above embodiments of the present invention, as shown in FIG. 9, the discharge gap includes the graphite discharge gap, the insulating tube 21, and two copper electrodes 31. The graphite discharge gap includes two graphite electrodes 11, the polytetrafluoroethylene annular film 12 arranged between the two graphite electrodes 11 and the insulating ring (not shown) sleeved on each graphite electrode 11. Each of both ends of the insulating tube 21 is provided with an internal thread. The outer walls of the two copper electrodes 31 are provided with external threads. The graphite discharge gap is sleeved in the insulating tube 21. The external threads of the two copper electrodes 31 are screwed to both ends of the insulating tube 21 to achieve assembly. In the present embodiment, each graphite electrode 11 has a diameter of 18 mm and a thickness of 2 mm. The polytetrafluoroethylene annular film 12 has a thickness of 0.4 mm, an outer diameter of 20 mm, and an inner diameter of 15 mm. The insulating ring has an outer diameter of 20.5 mm, an inner diameter of 18.2 mm, and a thickness of 1.8 mm. The insulating ring functions to facilitate assembly. The insulating tube 21 has an inner diameter of 20.6 mm and a length of 10 mm. Each copper electrode 31 has a diameter of 20 mm and a thickness of 3 mm. The copper electrode is exposed outside approximately 0.2 mm after being screwed to the insulating tube.

The above descriptions are only the preferred embodiments of the present invention, and do not impose limitations on the present invention in any form. Therefore, without departing from the content of the technical solution of the present invention, any simple modifications, equivalent changes and alterations made to the above embodiments based on the technical essence of the present invention shall still fall within the scope of the technical solution of the present invention.

The embodiments of the device described above are merely illustrative, the units described as separate components may or may not be physically separated, and the components displayed as units may or may not be physical units, that is, these components may be located in one place, or may be distributed to multiple network units. Some or all of the modules can be selected as needed to achieve one of the objectives of the solutions of the embodiments. Those of ordinary skill in the art can understand and implement without creative efforts.

The term "one embodiment", "an embodiment" or "one or more embodiments" as used herein means that the specific features, structures or characteristics described with reference to the embodiments are included in at least one embodiment of the present invention. In addition, it should be noted that the phrase example "in an/one embodiment" herein does not necessarily all refer to the same embodiment.

The specification shown herein describe substantial specific details. However, it can be understood that the embodiments of the present invention can be practiced without these specific details. In some instances, well-known methods, structures and technologies are not shown in detail, so as not to obscure the understanding of this specification.

In the claims, any reference numerals placed between parentheses should not be construed as a limitation to the claims. The term "include/comprise" does not exclude the presence of elements or steps which are not listed in the claims. The term "a/an" or "one" preceding an element does not exclude the presence of multiple such elements. The present invention can be implemented by means of hardware including several different elements and by means of a suitably programmed computer. In the unit claims listing several devices, several of these devices can be embodied in the same hardware item. The terms "first", "second", "third" and the like used herein do not indicate any order or sequence. These terms can be interpreted as designations.

Finally, it should be noted that the above embodiments are only used to illustrate the technical solutions of the present invention, rather than to limit the present invention. Although the present invention has been described in detail with reference to the above embodiments, those of ordinary skill in the art should understand that: the technical solutions recorded in the above embodiments can be modified, or some of the technical features can be equivalently replaced, but these modifications or replacements do not cause the essence of the corresponding technical solutions to deviate from the scope of the technical solutions of the embodiments of the present invention.

## Claims

1. A surge protection device connected between two terminals (T1, T2), comprising:
an impedance device (SI), a voltage-limiting surge protector (PMOV), and a switching surge protector (SG);
wherein
the impedance device is connected in parallel with the voltage-limiting surge protector;
a parallel branch of the impedance device and the voltage-limiting surge protector is connected in series with the switching surge protector to form a discharge channel of a lightning impulse current; and
a series branch of the impedance device and the switching surge protector forms a discharge channel of a follow current
**characterized in that** the impedance device comprises a series branch formed by a resistor (R) and an inductor (L).

2. The surge protection device according to claim 1, further comprising:
a thermal protector (TP) connected to the series branch where the switching surge protector is located; and
when a temperature reaches a preset temperature threshold, the thermal protector is configured to cut off a connection with the series branchwhere the switching surge protector is located.

3. The surge protection device according to claim 2, wherein
the thermal protector comprises a thermal fuse, a resettable thermostat, a thermal disconnector, a bimetal thermal circuit breaker, a mechanical thermal disconnector or a low-melting-point alloy disconnector.

4. The surge protection device according to claim 3, wherein
the low-melting-point alloy disconnector comprises an elastic metal sheet, and one end of the elastic metal sheet is welded to the switching surge protector by a low-temperature alloy.

5. The surge protection device according to claim 1, wherein
the voltage-limiting surge protector comprises a varistor or a suppression diode; and
the switching surge protector comprises a gas discharge tube, a semiconductor discharge tube or a discharge gap.

6. The surge protection device according to claim 5, wherein
the discharge gap comprises a graphite discharge gap, an insulating tube and two copper electrodes; wherein
the graphite discharge gap comprises two graphite electrodes, a polytetrafluoroethylene annular film arranged between the two graphite electrodes, and an insulating ring sleeved on each graphite electrode of the two graphite electrodes;
each of both ends of the insulating tube is provided with an internal thread;
outer walls of the two copper electrodes are provided with external threads; and
the graphite discharge gap is sleeved in the insulating tube, and the external threads of the two copper electrodes are screwed to the both ends of the insulating tube to implement an assembly.

7. The surge protection device according to claim 1, wherein
the switching surge protector comprises *n* discharge gaps and *n*-1 capacitors (C1);
the n discharge gaps are sequentially connected to the voltage-limiting surge protector;
first ends of the *n*-1 capacitors are separately connected to an end of the voltage-limiting surge protector, and
second ends of the *n*-1 capacitors are respectively connected to ends of a first discharge gap to an (*n*-1)^{th} discharge gap of the *n* discharge gaps in a one-to-one correspondence; wherein *n*≥2, and *n* is an integer.

8. A surge protection system, comprising: *m* surge protection devices of any one of claims 1-7 and *m*-1 capacitors;
wherein
the *m* surge protection devices are sequentially connected in series, and
the *m*-1 capacitors are connected in parallel with the switching surge protectors in a first surge protection device to an (*m*-1)^{th} surge protection device of the *m* surge protection devices, respectively; wherein *m*≥2, and *m* is an integer.

## Patentansprüche

1. Überspannungsschutzvorrichtung, die zwischen zwei Anschlüsse (T1, T2) geschaltet ist, umfassend:
eine Impedanzvorrichtung (SI), einen spannungsbegrenzenden Überspannungsschutz (PMOV) und einen schaltenden Überspannungsschutz (SG);
wobei
die Impedanzvorrichtung mit dem spannungsbegrenzenden Überspannungsschutz parallel geschaltet ist;
eine Parallelverzweigung der Impedanzvorrichtung und des spannungsbegrenzenden Überspannungsschutzes in Reihe mit dem schaltenden Überspannungsschutz geschaltet ist, um einen Entladungskanal eines Blitzschlagimpulsstroms zu bilden; und
eine Reihenverzweigung der Impedanzvorrichtung und des schaltenden Überspannungsschutzes einen Entladungskanal eines Folgestroms bildet,
**dadurch gekennzeichnet, dass** die Impedanzvorrichtung eine Reihenverzweigung umfasst, die durch einen Widerstand (R) und einen Induktor (L) gebildet ist.

2. Überspannungsschutzvorrichtung nach Anspruch 1, ferner umfassend:
einen Wärmeschutz (TP), der mit der Reihenverzweigung an der Stelle des schaltenden Überspannungsschutzes verbunden ist; und
wobei der Wärmeschutz dazu konfiguriert ist, eine Verbindung zu der Reihenverzweigung an der Stelle des schaltenden Überspannungsschutzes zu unterbrechen, wenn eine Temperatur einen voreingestellten Temperaturschwellenwert erreicht.

3. Überspannungsschutzvorrichtung nach Anspruch 2, wobei
der Wärmeschutz eine Wärmesicherung, ein rücksetzbares Thermostat, einen Wärmeausschalter, einen Bimetallwärmetrennschalter, einen mechanischen Wärmeausschalter oder einen Ausschalter aus einer Legierung mit niedrigem Schmelzpunkt umfasst.

4. Überspannungsschutzvorrichtung nach Anspruch 3, wobei
der Ausschalter aus einer Legierung mit niedrigem Schmelzpunkt ein elastisches Blech umfasst und ein Ende des elastischen Blechs mit einer Niedrigtemperaturlegierung an den schaltenden Überspannungsschutz geschweißt ist.

5. Überspannungsschutzvorrichtung nach Anspruch 1, wobei
der spannungsbegrenzende Überspannungsschutz einen Varistor oder eine Unterdrückungsdiode umfasst; und
der schaltende Überspannungsschutz eine Gasentladungsröhre, eine Halbleiterentladungsröhre oder einen Entladungsspalt umfasst.

6. Überspannungsschutzvorrichtung nach Anspruch 5, wobei
der Entladungsspalt einen Graphitentladungsspalt, eine Isolierröhre und zwei Kupferelektroden umfasst; wobei
der Graphitentladungsspalt zwei Graphitelektroden, eine ringförmige Polytetrafluorethylenfolie, die zwischen den zwei Graphitelektroden angeordnet ist, und einen isolierenden Ring umfasst, der auf jede der zwei Graphitelektroden gesetzt ist;
jedes der beiden Enden der Isolierröhre mit einem Innengewinde versehen ist;
Außenwände der zwei Kupferelektroden mit Außengewinde versehen sind; und
der Graphitentladungsspalt in die Isolierröhre eingesetzt ist und das Außengewinde der zwei Kupferelektroden in die beiden Enden der Isolierröhre geschraubt ist, um eine Baugruppe umzusetzen.

7. Überspannungsschutzvorrichtung nach Anspruch 1, wobei
der schaltende Überspannungsschutz *n* Entladungsspalte und *n*-1 Kondensatoren (C1) umfasst;
die *n* Entladungsspalte nacheinander mit dem spannungsbegrenzenden Überspannungsschutz verbunden sind;
erste Enden der *n*-1 Kondensatoren separat mit einem Ende des spannungsbegrenzenden Überspannungsschutzes verbunden sind und
zweite Enden der *n*-1 Kondensatoren jeweils in Eins-zu-eins-Beziehung mit Enden eines ersten Entladungsspalts bis (*n*-1)-ten Entladungsspalt der n Entladungsspalte verbunden sind; wobei *n*≥2 und *n* eine Ganzzahl ist.

8. Überspannungsschutzsystem, umfassend: m Überspannungsschutzvorrichtungen nach einem der Ansprüche 1-7 und *m*-1 Kondensatoren;
wobei
die *m* Überspannungsschutzvorrichtungen nacheinander in Reihe geschaltet sind und
die *m*-1 Kondensatoren mit den schaltenden Überspannungsschutzen in einer ersten Überspannungsschutzvorrichtung bis (*m*-1)-ten Überspannungsschutzvorrichtung der m Überspannungsschutzvorrichtungen parallel geschaltet sind; wobei *m*≥2 und *m* eine Ganzzahl ist.

## Revendications

1. Un dispositif de protection contre les surtensions connecté entre deux bornes (TI, T2), comprenant :
un dispositif à impédance (SI), un protecteur de surtension à limitation de tension (PMOV), et un protecteur de surtension de commutation (SG) ;
dans lequel
le dispositif à impédance est connecté en parallèle avec le protecteur de surtension à limitation de tension ;
une branche parallèle du dispositif à impédance et le protecteur de surtension à limitation de tension sont connectés en série avec le protecteur de surtension de commutation pour former un canal de décharge d'un courant d'impulsion de foudre ; et
une branche en série du dispositif à impédance et le protecteur de surtension de commutation forment un canal de décharge d'un courant suivant
**caractérisé en ce que** le dispositif à impédance comprend une branche en série formée par une résistance (R) et une inductance (L).

2. Un dispositif de protection contre les surtensions selon la revendication 1, comprenant en outre :
un protecteur thermique (TP) connecté à la branche en série où se trouve le protecteur de surtension de commutation ; et
lorsque la température atteint un seuil de température prédéfini, le protecteur thermique est configuré pour couper la connexion avec la branche en série où se trouve le protecteur de surtension de commutation.

3. Un dispositif de protection contre les surtensions selon la revendication 2, dans lequel
Le protecteur thermique comprend un fusible thermique, un thermostat réarmable, un sectionneur thermique, un disjoncteur thermique à bilame, un sectionneur thermique mécanique ou un sectionneur à alliage à faible point de fusion.

4. Un dispositif de protection contre les surtensions selon la revendication 3, dans lequel
le sectionneur à alliage à faible point de fusion comprend une feuille métallique élastique, et une extrémité de la feuille métallique élastique est soudée au protecteur de surtension de commutateur par un alliage à faible température.

5. Un dispositif de protection contre les surtensions selon la revendication 1, dans lequel
le protecteur de surtension à limitation de tension comprend une varistance ou une diode de suppression ; et
le protecteur de surtension de commutation comprend un tube de décharge de gaz, un tube de décharge à semi-conducteur ou un espace de décharge.

6. Un dispositif de protection contre les surtensions selon la revendication 5, dans lequel
l'espace de décharge comprend un espace de décharge à graphite, un tube isolant et deux électrodes de cuivre ; dans lequel
l'espace de décharge à graphite comprend deux électrodes à graphite, un film annulaire en polytétrafluoroéthylène agencé entre les deux électrodes à graphite, et une bague isolante emmanchée sur chaque électrode à graphite des deux électrodes à graphite ;
chacune de deux extrémités du tube isolant est munie d'un filetage interne ;
les parois externes des deux électrodes de cuivre sont munies de filetages externes ; et
l'espace à décharge à graphite est emmanché sur le tube isolant, et les filetages externes des deux électrodes de cuivre sont vissés sur les deux extrémités du tube isolant afin de constituer un ensemble.

7. Un dispositif de protection contre les surtensions selon la revendication 1, dans lequel
le protecteur de surtension de commutation comprend *n* espaces de décharge et *n* - 1 condensateurs (CI) ;
les *n* espaces de décharge sont connectés de façon séquentielle au protecteur de surtension à limitation de tension ;
les premières extrémités des *n* - 1 condensateurs sont connectées séparément à une extrémité du protecteur de surtension à limitation de tension, et
les deuxièmes extrémités des *n* - 1 condensateurs sont connectées respectivement aux extrémités du premier espace de décharge jusqu'au (*n* - 1)^{ième} espace de décharge des n espaces de décharge en correspondance une-à-une ; dans lequel *n* ≥ 2, et *n* est un nombre entier.

8. Un système de protection de surtension, comprenant : *m* dispositifs de protection de surtension selon l'une quelconque des revendications 1-7 et *m*-1 condensateurs ;
dans lequel
les *m* dispositifs de protection de surtension sont connectés in série de façon séquentielle, et
les *m* - I condensateurs sont connectés en parallèle avec les protecteurs de surtension de commutation dans un premier dispositif de protection de surtension jusqu'au (*m* - 1)^{ième} dispositif de protection de surtension des *m* dispositifs de protection de surtension, respectivement ; dans lequel *m* ≥ 2, et *m* est un nombre entier.
